# EUROPÄISCHE PATENTSCHRIFT

(11) **EP 3 894 273 B1**
(45) Veröffentlichungstag und Bekanntmachung des Hinweises auf die Patenterteilung: **15.05.2024**
(21) Anmeldenummer: 19729502.5
(22) Anmeldetag: 05.06.2019
(51) Int. Cl.: B60P 1/48, B60P 1/64

(54) **LADEARMANORDNUNG FÜR EIN WECHSELLADERFAHRZEUG ZUM LADEN VON TRANSPORTBEHÄLTERN MIT EINEM HAKEN**
LOADING ARM ARRANGEMENT FOR A SWAP BODY VEHICLE FOR LOADING TRANSPORT CONTAINERS WITH A HOOK
ENSEMBLE DE BRAS DE CHARGEMENT POUR UN VÉHICULE ÉQUIPÉ D'UN BRAS ÉLÉVATEUR POUR LE CHARGEMENT DE CONTENEURS DE TRANSPORT COMPRENANT UN CROCHET

(30) Priorität: 20.11.2018 DE 102018129146
(43) Veröffentlichungstag der Anmeldung: 20.10.2021
(73) Patentinhaber: The Dynamic Engineering Solution Pty Ltd, Holden Hill, South Australia 5088 (AU)
(72) Erfinder: NEWSTEAD, Michael, Gawler, South Australia 5118 (AU); BROWNE, James, Woodville South, South Australia 5011 (AU); FIORINOTTO, Oscar, Semaphore Park, South Australia 5019 (AU)
(74) Vertreter: Kirschner, Sebastian
(86) Internationale Anmeldenummer: PCT/EP2019/064641
(87) Internationale Veröffentlichungsnummer: WO 2020/104077

(56) Entgegenhaltungen:
- CA-A- 1 210 365
- GB-A- 2 085 845
- US-A1- 2006 263 184

## Beschreibung

Die Erfindung betrifft eine Ladearmanordnung für ein Wechselladerfahrzeug mit den Merkmalen des Patentanspruches 1.

Wechselladerfahrzeuge sind Lastkraftwagen, welche als Trägerfahrzeuge zum Transport spezieller Container konzipiert sind. Solche Wechselladerfahrzeuge werden auch als Abrollkipper oder Hakenabroller bezeichnet. Es existieren unterschiedliche Abrollbehälter, die von einem Wechselladerfahrzeug mit einer Ladearmanordnung aufgenommen werden können.

Es existieren Abrollbehälter, die einen schräg nach oben weisenden Haken aufweisen. Um solche Transportbehälter wie beispielsweise Abrollpritschen auf das Wechselladerfahrzeug aufzuladen, weist die Ladearmanordnung einen entsprechenden Greifhaken auf, mit dem der Haken des Transportbehälters gegriffen werden kann, um so den Transportbehälter auf das Wechselladerfahrzeug zu ziehen.

Aus der EP 0 107 326 A1 und der EP 0 107 892 A1 sowie der CA 1 210 365 A ist jeweils ein Wechselladerfahrzeug mit einer Ladeanordnung bekannt. Die Ladeanordnung weist einen Hauptarm auf, wobei der Hauptarm am Fahrzeugrahmen schwenkbar angeordnet ist. An dem Hauptarm ist ein Hilfsarm angeordnet. Es ist an dem freien Ende des Hilfsarm ein Schwenkarmteil angeordnet. Das Schwenkarmteil ist mit seinem einen Ende gelenkig mit dem Hilfsarm und mit seinem anderen Ende gelenkig mit dem Greifhaken verbunden. Eine Kolbenzylindereinheit verbindet dabei den Hilfsarm mit dem Schwenkarmteil, wobei die Kolbenzylindereinheit exzentrisch am Schwenkarmteil angreift. Ferner greift exzentrisch eine weitere Kolbenzylindereinheit am Schwenkarmteil an, die sich zwischen dem Schwenkarmteil und dem Greifhaken erstreckt. In der Transportstellung ragt der Hilfsarm im Wesentlichen senkrecht auf, das Schwenkarmteil erstreckt sich horizontal zur Ladefläche des Fahrzeugs und der Greifhaken hängt in Längsrichtung des Wechselladerfahrzeugs gesehen hinter dem Hilfsarm.

Hierdurch wird zusätzlicher Bauraum in Längsrichtung des Wechselladerfahrzeugs beansprucht.

Aus der GB 2 085 845 A ist Wechselladerfahrzeug mit einer Ladeanordnung bekannt, wobei die Ladearmanordnung einen Hauptarm und einen winklig dazu angeordneten Hilfsarm aufweist. An dem Hilfsarm ist über ein Gelenk schwenkbar ein Schwenkarmteil angeordnet, wobei das Schwenkarmteil mittels eines Betätigungszylinders oder mehrerer Betätigungszylinder zwischen einer zusammengeklappten Position nahe dem Hilfsarm und einer äußeren Position geschwenkt werden kann, in der das Schwenkarmteil eine Verlängerung des Hilfsarms bildet.

Ferner existierten Ladearmanordnungen, die einen sogenannten ISO-Container aufnehmen können. Die entsprechende Norm für diese ISO-Container bildet die ISO-Norm 668. Diese ISO-Container weisen keinen entsprechenden Haken auf, sondern werden an den Ecken gegriffen. Dazu weist eine entsprechend ausgebildete Ladearmanordnung mindestens zwei Eckgreifer auf, wobei die Eckgreifer den ISO-Container an den Ecken greifen können.

Um nun mit einem Wechselladerfahrzeug Abrollbehälter von beiden Typen, d. h. mit Haken und Abrollbehälter in Form von ISO-Containern laden zu können, sind im Stand der Technik Adapterlösungen bekannt.

Aus der GB 2 298 856 A ist ein Wechselladerfahrzeug mit einer Ladearmanordnung bekannt. Die Ladearmanordnung weist einen Hauptarm auf, wobei der Hauptarm am Fahrzeugrahmen schwenkbar angeordnet ist. An dem Hauptarm ist wiederum ein gekröpft ausgebildeter Hilfsarm in Form eines Knickarms über ein Knickgelenk angeordnet. An dem freien Ende des Knickarms ist ein Greifhaken ausgebildet. An dem gekröpften Bereich des Knickarms kann nun ein Adapter mit vier Eckgreifern angebracht werden, um so auch ISO-Container auf- und abladen zu können. Der Adapter kann auf dem Wechselladerfahrzeug hinter der Fahrerkabine abgeladen werden, wenn er nicht gebraucht wird. Diese Ausgestaltung hat den Nachteil, dass, falls unterschiedliche Abrollbehälter geladen werden müssen, jedes Mal der Adapter angebracht oder wieder von dem Knickarm gelöst werden muss.

Ferner hat es sich herausgestellt, dass das Greifen von ISO-Containern mit vier Eckgreifern nicht immer möglich ist. Beispielsweise werden solche Wechselladerfahrzeuge auch in militärischen Anwendungen eingesetzt, wobei ISO-Container oder die Transportbehälter mit Haken nicht immer auf einem ebenen Untergrund, sondern im Gelände stehen. Hierbei besteht das Problem, dass die ISO-Container in einem weichen Untergrund einsinken können, und so die unteren Ecken des ISO-Containers nicht oder nur sehr schlecht erreichbar sind.

Ferner besteht bei solchen Einsätzen das Problem, dass der Bediener des Wechselladerfahrzeugs sich einer Gefahr aussetzten kann, wenn er das Fahrzeug verlässt. Daher ist es nicht immer möglich, einen Adapter zu verwenden.

Aus der EP 0 634 304 A1 ist ein Wechselladerfahrzeug mit einer Ladearmanordnung zum Laden von ISO-Containern bekannt. Die Ladearmanordnung ist dabei als Schiebehaken ausgebildet. Die Ladearmanordnung weist einen schwenkbar am Fahrzeugrahmen festgelegten Hauptarm auf, wobei ein gekröpft ausgebildeter Hilfsarm in Form eines Schiebehakenarms teleskopierbar am Hauptarm angeordnet ist. Der Hauptarm ist teleskopierbar. Der Schiebearm ist rechtwinklig zum Hauptarm an dessen freiem Ende ausgebildet, wobei der Schiebearm ebenfalls als Teleskoparm ausgebildet ist. An dem Ende des Schiebearms ist eine Traverse angeordnet, wobei am Ende der Traverse die Eckgreifer angeordnet sind. Die Eckgreifer sind dabei wiederum teleskopierbar an der Traverse angeordnet. Um den ISO-Container nun aufzuladen, wird das Wechselladerfahrzeug zunächst möglichst fluchtend zum Container positioniert. Hiernach kann durch Schwenken und Teleskopieren des Hauptarms, durch Teleskopieren des Schiebearms und durch Teleskopieren der Traverse mit den Greifern die Position der Eckgreifer relativ zu den oberen Ecken des Containers positioniert werden. Es ist nun nicht mehr erforderlich, dass die unteren Ecken des ISO-Containers gegriffen werden, sondern nur die oberen Ecken des ISO-Containers, welche besser erreichbar sind.

Es hat sich herausgestellt, dass auch diese Ausgestaltung noch nicht optimal ausgebildet ist. Es ist weiterhin das Aufladen des ISO-Containers nur schwer möglich, wenn der ISO-Container auf weichem Untergrund steht und teilweise einsinkt, wobei beispielsweise der Container um seine Längsachse gekippt relativ zum Wechselladerfahrzeug steht oder das Wechselladerfahrzeug nicht genau fluchtend zum Container positionierbar ist.

Aus der US 2006 / 263 184 A1 ist eine Ladearmanordnung für ein Wechselladerfahrzeug bekannt, wobei die Ladearmanordnung zum Entladen und Beladen von Transportbehältern mit einem Haken ausgebildet ist, wobei die Ladearmanordnung aufweist:
- einen Hauptarm,
- einen mit dem Hauptarm verbundenen Hilfsarm, und
- ein Schwenkarmteil, wobei an dem Hilfsarm schwenkbar das Schwenkarmteil über ein Gelenk angeordnet ist,
wobei in einer Transportstellung das Schwenkarmteil in eine Ausnehmung des Hilfsarms eingreift.

Der Erfindung liegt daher die Aufgabe zugrunde, die gattungsbildende Ladearmanordnung und ein entsprechendes Wechselladerfahrzeug mit einer solchen Ladearmanordnung zu verbessern.

Diese der Erfindung zugrunde liegende Aufgabe wird nun durch eine Ladearmanordnung mit den Merkmalen des unabhängigen Patentanspruchs 1 gelöst. Erfindungsgemäß greift in einer Transportstellung der Schwenkarm in eine Ausnehmung des Hilfsarms ein. Dies hat den Vorteil, dass in der Transportstellung lediglich ein minimaler Bauraum in Längsrichtung des Wechselladerfahrzeugs gesehen beansprucht wird. Der Bauraum in Längsrichtung des Wechselladerfahrzeugs ist optimiert. In der Transportstellung erstreckt sich der Hauptarm im Wesentlichen in Längsrichtung des Wechselladerfahrzeugs und der Hilfsarm ragt auf. Da der Hilfsarm eine Ausnehmung aufweist, in die der Schwenkarm eingeschwenkt werden kann, hat dies den Vorteil, dass der axiale Bereich des Hilfsarms sowohl für den Hilfsarm als auch für den Schwenkarmteil genutzt werden kann. Das Schwenkarmteil erstreckt sich in der Transportstellung aufragend und überlappt in Längsrichtung des Wechselladerfahrzeugs zu mehr als 60% insbesondere zu mehr als 80% mit dem Hilfsarm. Es ist denkbar, dass der Greifhaken zumindest teilweise in die Ausnehmung eingreift und ggf. teilweise in Axialrichtung des Wechselladerfahrzeugs über die Ausnehmung hinausragt. Diese Ladearmanordnung eignet sich insbesondere für kürzere Transportbehälter wie 20 Fuss Container und entsprechende Abrollbehälter.

Vorzugsweise weist der Hilfsarm zwei Schenkel auf, wobei die Schenkel die Ausnehmung begrenzen, wobei das Schwenkarmteil an den Schenkeln gelenkig angeordnet ist und sich in der Transportstellung zwischen den Schenkeln erstrecken kann. Hierdurch ist eine platzsparende und mechanisch belastbare Konstruktion geschaffen. Die beiden Schenkel können eine Achse aufweisen, auf oder an der das Schwenkarmteil angeordnet ist.

Vorzugsweise ist der Greifhaken mittels eines weiteren Gelenks drehbar an dem Schwenkarmteil angeordnet. Dies ermöglicht ein sicheres Greifen des Hakens des Transportbehälters. Am Greifhaken und am Schwenkarmteil greift vorzugsweise eine Kolbenzylindereinheit an, die vorzugsweise hydraulisch oder pneumatisch betätigbar ist.

Um eine optimale Positionierbarkeit der Eckgreifer und/oder des Greifhakens zu erreichen, ist der Hauptarm teleskopierbar ausgebildet, und der Hilfsarm ist vorzugsweise ebenfalls teleskopierbar ausgebildet, wobei der Hilfsarm ein am Hauptarm winkelfest angeordnetes, erstes Teleskoparmteil und ein zweites Teleskoparmteil aufweist, wobei das zweite Teleskoparmteil relativ zum ersten Teleskoparmteil teleskopierbar ist, wobei an dem zweiten Teleskoparmteil das Schwenkarmteil gelenkig angeordnet ist. Das zweite Teleskoparmteil weist die beiden Schenkel auf. Dies ermöglicht es, dass das Greifersystem bzw. der Greifhaken in einem großen Bereich zum Greifen der Transportbehälter bewegt werden kann.

Am Hilfsarm, vorzugsweise am zweiten Teleskoparmteil, und am Schwenkarmteil greift eine Kolbenzylindereinheit an, die vorzugsweise hydraulisch oder pneumatisch betätigbar ist zum Schwenken des Schwenkarmteils relativ zum Hilfsarm.

Der Greifhaken ist an einem Ende des Schwenkarmteils angeordnet. Dies hat den Vorteil, dass an dem anderen Ende des Schwenkarmteils ein Greifersystem zum Greifen von ISO-Containern angeordnet sein kann, wobei das den Hilfsarm und das Schwenkarmteil verbindende Gelenk zwischen dem ISO-Containergreifersystem und dem Greifhaken-Gelenk angeordnet ist.

Das den Hilfsarm und das Schwenkarmteil verbindende Gelenk befindet sich im Wesentlichen mittig zwischen dem ersten und zweiten Ende des Schwenkarmteils. Das den Hilfsarm und das Schwenkarmteil verbindende Gelenk befindet sich vorzugsweise im Bereich 40 % bis 60 % der Längserstreckung des Schwenkarmteils. Dies hat den Vorteil, dass durch Schwenken des Schwenkarms sowohl das ISO-Containergreifersystem als auch der Greifhaken maximal beweglich sind.

In erfindungsgemäßer Ausgestaltung ist an dem Schwenkarmteil , nämlich an einem Ende des Schwenkarmteils, eine Traverse mit mindestens zwei Eckgreifern angeordnet. Dies hat den Vorteil, dass die Ladearmanordnung zum Entladen und Beladen von ISO-Containern geeignet ist. Das Gelenk, mit welchem der Schwenkarmteil mit dem Hilfsarm verbunden ist, ist vorzugsweise mittig zwischen dem ersten und dem zweiten Ende des Schwenkarms angeordnet. An dem einen Ende des Schwenkarms ist dabei die Traverse angeordnet und an dem anderen Ende des Schwenkarms ist der Greifhaken angeordnet.

Demnach ist die Ladearmanordnung für ein Wechselladerfahrzeug mit einem Hauptarm und mit einem Hilfsarm derart ausgestaltet, dass die Ladearmanordnung zum Entladen und Beladen von ISO-Containern und zum Entladen und Beladen von Transportbehältern mit einem Haken ausgebildet ist. Diese Ausgestaltung hat den Vorteil, dass auf einen Adapter verzichtet werden kann. Sowohl Transportbehälter mit einem Haken als auch ISO-Container können mit dieser Ladearmanordnung vom Wechselladerfahrzeug entladen oder auf das Wechselladerfahrzeug beladen werden.

Die Traverse ist relativ zum Schwenkarmteil um zwei Achsen schwenkbar. Der Antrieb kann dabei motorisch, pneumatisch oder insbesondere hydraulisch erfolgen. Die Traverse ist zum einem um die Längsachse des Schwenkarmteils schwenkbar. Hierdurch kann ein Winkelversatz zwischen dem Wechselladerfahrzeug und dem Abrollbehälter ausgeglichen werden. Wenn der Abrollbehälter nicht genau fluchtend zum Wechselladerfahrzeug steht, sondern in einem leichten Winkelversatz, so kann die Traverse um die Längsachse des mit ihr verbundenen Schwenkarmteils gedreht werden, wodurch die Eckgreifer sicher an den oberen Ecken des ISO-Containers angebracht werden können. Die Schwenkbarkeit kann beispielsweise mehr als 5 Grad, insbesondere mehr als 10 Grad betragen.

Diese Ausgestaltung hat ferner den Vorteil, dass es durch die präzisere Einstellbarkeit der Position der Traverse mit den zwei Eckgreifern nicht mehr nötig ist, dass der Bediener die Fahrzeugkabine verlässt. Dies hat insbesondere bei militärischen Anwendungen Vorteile, da hierdurch der Bediener geschützt ist. Das Wechselladerfahrzeug ist insbesondere als militärisches Fahrzeug ausgebildet. Es ist denkbar, dass die Fahrerkabine eine Panzerung aufweist.

Die Traverse und der mit ihr verbundene Schwenkarmteil sind T-förmig zueinanderstehend angeordnet. Ein Gelenk zwischen der Traverse und dem Schwenkarmteil ist insbesondere als Kreuzgelenk ausgebildet. Das Kreuzgelenk weist ein Kreuzstück auf, wobei das Kreuzstück zwei rechtwinklig gekreuzte Achsstummelpaare aufweist. Das eine Achsstummelpaar zeigt dabei in der Grundstellung im Wesentlichen in Längsrichtung des Hilfsarms. An diesem Achsstummelpaar ist die Traverse drehbar um die Längsachse des Schwenkarmteils angeordnet. Das andere Achsstummelpaar ist in der Grundstellung senkrecht zum verbundenen Schwenkarmteil und zu der Traverse angeordnet und ermöglicht so die Bewegung um die Querachse. Ein Achsstummelpaar ist drehbar am Schwenkarmteil und das andere Achsstummelpaar ist drehbar an der Traverse angeordnet.

Am Ende des freien Schwenkarmteils ist ein Gehäuse angeordnet, wobei vorzugsweise das sich entlang der Querachse erstreckende Achsstummelpaar in zwei Aufnahmen des Gehäuses drehbar angeordnet, insbesondere gelagert ist. Die Traverse durchgreift dabei das Gehäuse. Das Gehäuse weist an seiner Oberseite eine Montageöffnung und an der Front- und Rückseite jeweils ebenfalls eine Montageöffnung auf, wobei diese beiden Montageöffnungen als Aufnahmen für das in Querrichtung orientierte Achsstummelpaar dienen. In den Montageöffnungen können Lagerschalen eingesetzt sein, wobei in den Lagerschalen Köpfe des zugeordneten Achstummelpaares drehbar angeordnet sind.

Das Kreuzstück ist zu Montagezwecken zerlegbar ausgebildet. Das Kreuzstück weist die insgesamt vier Achsstummel und ein Mittelstück auf, an dem die Achsstummel befestigt werden können. Das Mittelstück und die Achsstummel sind insbesondere durch eine Schraubverbindung miteinander verbindbar.

Die Traverse weist zwei Traversenbereiche auf, wobei jeder der beiden Traversenbereiche teleskopierbar ausgebildet ist. Die Eckgreifer sind ferner um die Längsachse der Traverse schwenkbar.

Um nun die Eckgreifer bzw. den Haken präzise relativ zum Abrollbehälter positionieren zu können, weist das Wechselladerfahrzeug insbesondere ein Sensorsystem mit mindestens einem vorzugsweise optischen Sensor auf. Mit diesem Sensorsystem lässt sich die Position des Abrollbehälters relativ zum Wechselladerfahrzeug erfassen. Mittels des Sensorsystems ist insbesondere eine Bestimmung der Position der Ecken bzw. des Hakens des Abrollbehälters möglich. Es ist denkbar, dass das Wechselladerfahrzeug eine automatisierte Steuerung zum Be- und Entladen der Abrollbehälter aufweist. Hierzu wird zunächst mittels des Sensorsystems die Position des Abrollbehälters und insbesondere der oberen Ecken im Falle eines ISO-Containers oder des Hakens im Fall eines Transportbehälters mit einem Haken bestimmt. Ausgehend davon, wird die Ladearmanordnung vollautomatisch oder teilautomatisch derart angesteuert, dass die Eckgreifer bzw. der Greifhaken den Abrollbehälter entsprechend greifen kann.

Innerhalb der Fahrerkabine kann ein Display angeordnet sein, dass dem Bediener ein Kamerabild oder ein virtuell gerendertes Bild des Containers und der Ladearmanordnung anzeigt. Es ist möglich, dass als Display eine VR-Brille dient (Virtual-Reality-Brille) dient. Das Display erleichtert dem Bediener die Steuerung und/oder die Kontrolle des Ladevorgangs.

Wenn der Abrollbehälter auf das Wechselladerfahrzeug gezogen worden ist, so wird der Abrollbehälter dort mittels eines Twist-Lock-Systems automatisch fixiert.

Die eingangs genannten Nachteile sind daher vermieden, entsprechende Vorteile sind erzielt.

Es gibt nun eine Vielzahl von Möglichkeiten, die Erfindung auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung näher erläutert. In der Zeichnung zeigt:
- Fig. 1: in schematischer Seitenansicht ein Wechselladerfahrzeug mit einer Ladearmanordnung in einer Grundstellung,
- Fig. 2: in einer schematischen Seitenansicht ein Teil des Wechselladerfahrzeugs mit der Ladearmanordnung in einer aufgefahrenen Stellung beim Aufladen eines Abrollbehälters mit einem Haken,
- Fig. 3: in einer schematischen Rückansicht die Ladearmanordnung,
- Fig. 4: in einer schematischen Seitenansicht die Ladearmanordnung, wobei der Hauptarm waagerecht angeordnet ist und der Hilfsarm senkrecht angeordnet ist,
- Fig. 5: in einer schematischen Seitenansicht die Ladearmanordnung, wobei der Hauptarm mit dem Hilfsarm geschwenkt angeordnet ist und wobei ein Schwenkarmteil und ein Greifhaken nach vorne geschwenkt sind, sowie
- Fig. 6: in einer schematischen Seitenansicht die Ladearmanordnung in der in Fig. 5 dargestellten Stellung, wobei der Greifhaken und ein Schwenkarmteil nach hinten gekippt sind.

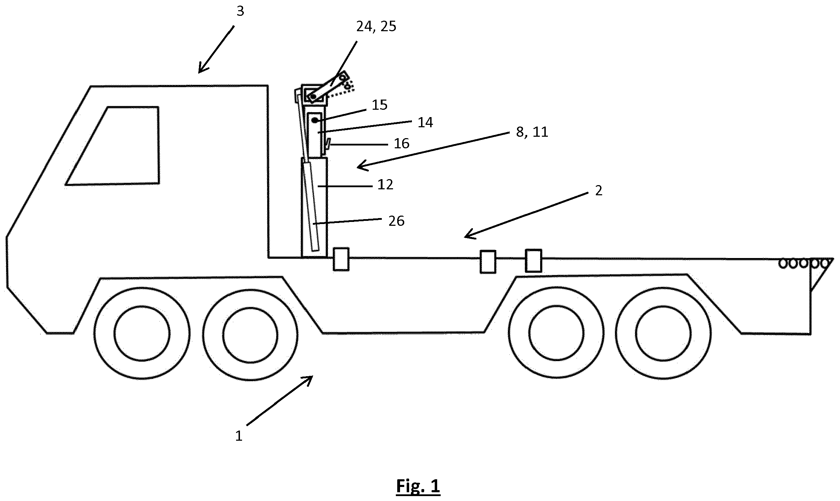

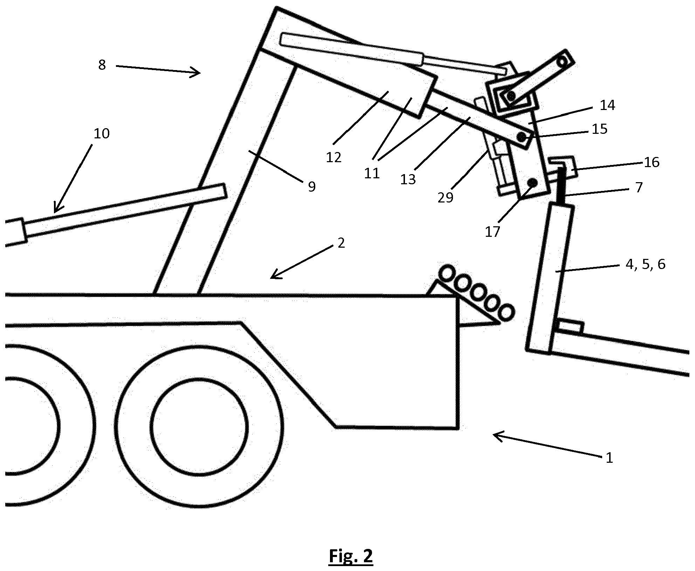

In Fig. 1 und 2 ist ein Wechselladerfahrzeug 1 gut zu erkennen. Das Wechselladerfahrzeug 1 weist eine Ladefläche 2 und eine Fahrerkabine 3 auf. Das Wechselladerfahrzeug 1 ist insbesondere für militärische Einsätze ausgebildet. Hierzu kann die Fahrerkabine 3 beispielsweise gepanzert ausgebildet sein. Das Wechselladerfahrzeug 1 ist insbesondere nicht nur für den Einsatz auf einer Straße, sondern auch für ein Gelände geeignet.

Mit dem Wechselladerfahrzeug 1 sind nun vorzugsweise unterschiedliche Abrollbehälter 4, wie beispielsweise ein ISO-Container (nicht dargestellt) oder ein Transportbehälter 5 mit einem Haken 7 ladbar. Hier ist eine entsprechende Abrollpritsche 6 als Abrollbehälter 4 dargestellt. Das Wechselladerfahrzeug 1 weist eine Ladearmanordnung 8 auf, die zum Beladen sowohl von ISO-Containern als auch von Transportbehältern 5 mit einem Haken 7 geeignet ist.

Die Ladearmanordnung 8 weist einen Hauptarm 9 auf, wobei der Hauptarm 9 mit seinem einen Ende schwenkbeweglich an der Ladefläche 2, insbesondere an einem Fahrzeugrahmen oder dergleichen angelenkt ist. Zum Schwenken des Hauptarms 9 ist ein Antrieb insbesondere in Form einer hydraulisch bestätigten Kolbenzylindereinheit 10 vorhanden. Alternativ kann ein pneumatischer oder motorischer Antrieb vorgesehen sein. Der Hauptarm 9 kann in seiner Längsrichtung insbesondere teleskopierbar ausgebildet sein, um verschieden lange Abrollbehälter 4 aufnehmen zu können. An dem anderen Ende des telekopierbaren Teils des Hauptarms 9 ist ein Hilfsarm 11 angeordnet, wobei der Hilfsarm 11 sich im Wesentlichen senkrecht zum Hauptarm 9 erstreckt. Der Hilfsarm 11 ist dabei winkelfest am Hauptarm 9 befestigt. Der Hilfsarm 11 ist insbesondere an einem teleskopierbaren Teil des Hauptarms 9 befestigt. Diese Ausgestaltung kann auch als Schiebehaken bezeichnet werden. Der Hilfsarm 11 kann auch als Schiebearm bezeichnet werden. Es ist denkbar, dass der Hilfsarm 11 als Knickarm ausgebildet ist und schwenkbar am Hauptarm 9 angeordnet ist (nicht dargestellt).

Der Hilfsarm 11 weist nun vorzugsweise zwei Greifersysteme auf. Zum einem ist ein Greifersystem zum Greifen von ISO-Containern und zum anderen ist ein Greifersystem zum Greifen von Transportbehältern 5 mit einem Haken 7 vorhanden. Hierdurch kann auf einen Adapter verzichtet werden.

Der Hilfsarm 11 weist hier zwei Teleskoparmteile 12, 13 auf, die zueinander verschiebbar angeordnet sind. An dem Ende des zweiten Teleskoparmteils 13 ist ein Schwenkarmteil 14 angeordnet. Am Hilfsarm 11, nämlich am Teleskoparmteil 13, ist über ein Gelenk 15 ein Schwenkarmteil 14 angeordnet. An dem Schwenkarmteil 14 ist ein Greifhaken 16 schwenkbeweglich angeordnet. Der Greifhaken 16 ist mit dem Schwenkarmteil 14 über ein Gelenk 17 verbunden. Der Teleskoparmteil 13 weist eine Ausnehmung 18 auf, wobei in einer Transportstellung (vgl. Fig. 1) der Schwenkarmteil 14 in die Ausnehmung 18 des Hilfsarms 11, nämlich des zweiten Teleskoparmteils 13 eingreift. Dies hat den Vorteil, dass in der Transportstellung (vgl. Fig. 1) nur wenig Bauraum beansprucht wird. In der Transportstellung erstrecken sich der Hilfsarm 11 und das Schwenkarmteil 14 koaxial, nämlich insbesondere in einer Querschnittsebene des Wechselladerfahrzeugs 1. Hierdurch können in Axialrichtung des Wechselladerfahrzeugs 1 längere Abrollbehälter 4 geladen werden. Diese Ladearmanordnung 8 eignet sich insbesondere für kürzere Wechselladerfahrzeuge 1 für 20 Fuss Container und entsprechende Abrollbehälter 4.

Das zweite Teleskoparmteil 13 weist zwei parallel zueinander beabstandete Schenkel 19 an seinem freien Ende auf, wobei die beiden Schenkel 19 die Ausnehmung 18 begrenzen. Die beiden Schenkel 19 umgreifen den Schwenkarmteil 14 im Bereich des Gelenks 15. Hierdurch ist eine besonders bauarmsparende Anordnung des Schwenkarmteils 14 und damit des Greifhakens 16 in der Transportstellung ermöglicht.

Der Greifhaken 16 ist vorzugsweise schwenkbeweglich an dem in die Ausnehmung 18 hineinreichenden Ende des Schwenkarmteils 14 angeordnet. Das Schwenkarmteil 14 weist einen Grundköper und zwei Schenkel 30, 31 auf, wobei der Greifhaken 16 an den Schenkeln 30, 31 schwenkbeweglich angeordnet ist. Die Schenkel 30, 31 bilden ein erstes freies Ende des Schwenkarmteils 14. Das Schwenkarmteil 14 ist an seinem Grundkörper schwenkbeweglich mit dem Hilfsarm 11 verbunden.

Der Greifhaken 16 weist einen stangenförmigen Hebelbereich und einen Hakenbereich an einem Ende auf. An dem anderen Ende, das durch den Hebelbereich gebildet ist, greift eine Kolbenzylindereinheit 29 an. Die Kolbenzylindereinheit 29 greift zum einen am Hebelbereich des Greifhakens und am Schwenkarmteil 14 bzw. einer mit dem Schwenkarmteil 14 verbundenen Halterung an.

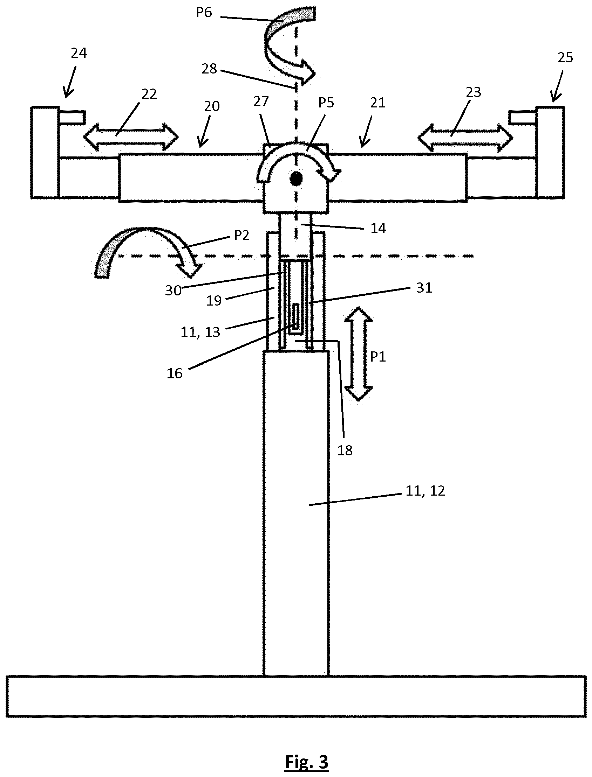

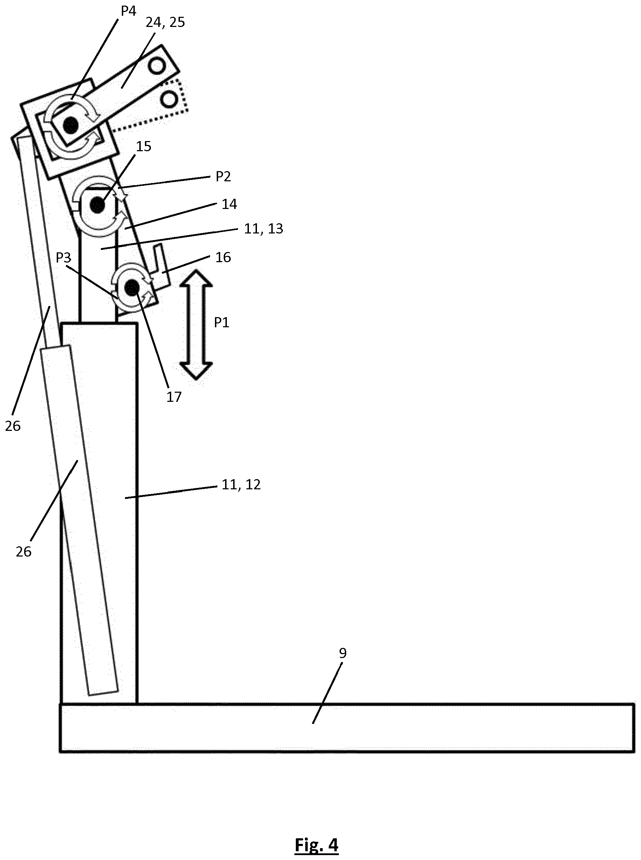

Im Folgenden darf das andere Greifersystem zum Greifen von ISO-Containern näher anhand der Fig. 3 und 4 erläutert werden.

In Fig. 3 ist die Teleskopierbarkeit des Hilfsarms 11 durch den Pfeil P1 angedeutet. An einem zweiten, freien Ende des Schwenkarmteils 14 ist die Traverse 20, 21 angeordnet. Die Traverse 20, 21 ist dabei im Wesentlichen in ihrer Mitte am Ende des Schwenkarmteils 14 angeordnet. Die Traverse 20, 21 weist einen ersten Traversenbereich 20 und ein zweiten Traversenbereich 21 auf, die jeweils in Fig. 3 in Längsrichtung der Traverse 20, 21 links und rechts über das Schwenkarmteil 14 seitlich hinaus ragen. Jeder der beiden Traversenbereiche 20, 21 ist teleskopierbar ausgebildet. Die Teleskopierbarkeit ist durch die Pfeile 22, 23 angedeutet. An den freien Enden der Traversenbereiche 20, 21 sind Eckgreifer 24, 25 angeordnet, die jeweils um die Längsachse der Traverse 20, 21 schwenkbar sind, was durch den Pfeil P4 (vgl. Fig. 4) angedeutet ist. Die jeweiligen Bewegungen der Traversenbereichen 20, 21 bzw. der Eckgreifer 24, 25 erfolgt hydraulisch, pneumatisch oder motorisch. Dadurch, dass das Schwenkarmteil 14 relativ zum zweiten Teleskoparmteil 13, nämlich um das Gelenk 15, schwenkbar ist, kann auch die Traverse 20, 21 so geschwenkt werden, wie es in Fig. 3 durch den Pfeil P2 angedeutet ist. Hierzu ist eine Kolbenzylindereinheit 26 am Hilfsarm 11, nämlich am ersten Teleskoparmteil 12 und an einem Ende des Schwenkarmteils 14, nämlich hier an dem Ende mit der Traverse 20, 21, angeordnet.

Ein besonderer Vorteil der Ladearmanordnung 8 ist, dass die Traverse 20, 21 relativ zum Schwenkarmteil 14 um zwei Achsen schwenkbar ist. Dies wird dadurch erreicht, dass die Traverse 20, 21 mit dem Schwenkarmteil 14 über ein Kreuzgelenk (nicht dargestellt) verbunden ist. In alternativer Ausgestaltung kann anstatt eines Kreuzgelenks beispielsweise ein Kugelgelenk verwendet werden (nicht dargestellt).

An dem Ende des Schwenkarmteils 14 ist ein Gehäuse 27 angeordnet, wobei innerhalb des Gehäuses 27 das Kreuzgelenk angeordnet ist. Ferner weist das Gehäuse 27 jeweils zwei Durchgriffsöffnungen auf, so dass die Traverse 20, 21 durch das Gehäuse 27 hindurchreichen kann.

Hierdurch ist die Traverse 20 sowohl um die Längsachse 28 des Schwenkarmteils 14 als auch um eine Querachse schwenkbar (vgl. Pfeile P5 und P6). Die Querachse erstreckt sich dabei quer sowohl zum Schwenkarmteil 14 als auch quer zur Traverse 20, 21. Die Längsachse 28 und die Querachse stehen senkrecht zueinander.

Durch eine Schwenkung der Traverse 20, 21 um die Längsachse 28 kann ausglichen werden, wenn das Wechselladerfahrzeug 1 und der Abrollbehälter 4 in Form des ISO-Containers winklig zueinander und nicht fluchtend zueinander stehen. Durch ein Schwenken der Traverse 20, 21 um die Querachse kann ausgeglichen werden, wenn der ISO-Container um seine Längsachse gekippt steht, weil er beispielsweise in einen weichen Untergrund eingesunken ist.

Durch diese mögliche Schwenkbarkeit der Traverse 20, 21 um die Längsachse 28 (vgl. Pfeil P6) und die Querachse (vgl. Pfeil P5) kann so auch bei schwierigen Umgebungsverhältnissen der ISO-Container von der Ladearmanordnung 8 sicher aufgenommen werden.

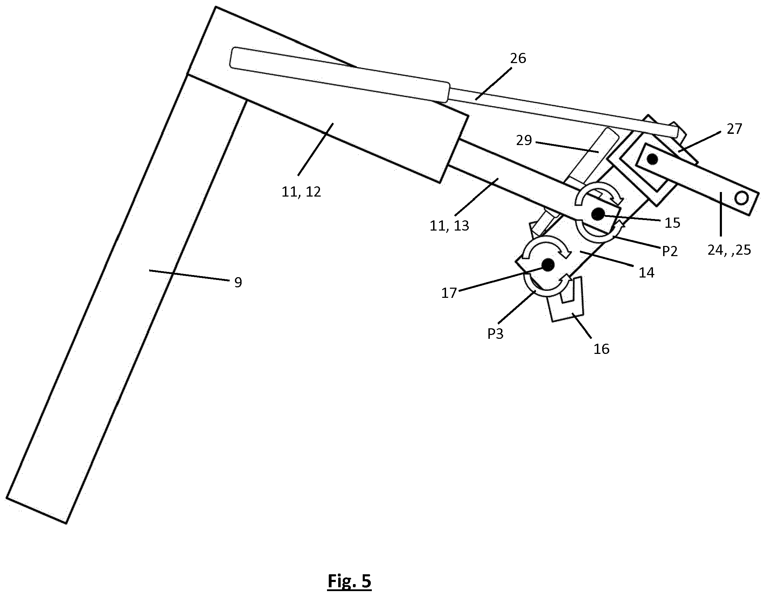

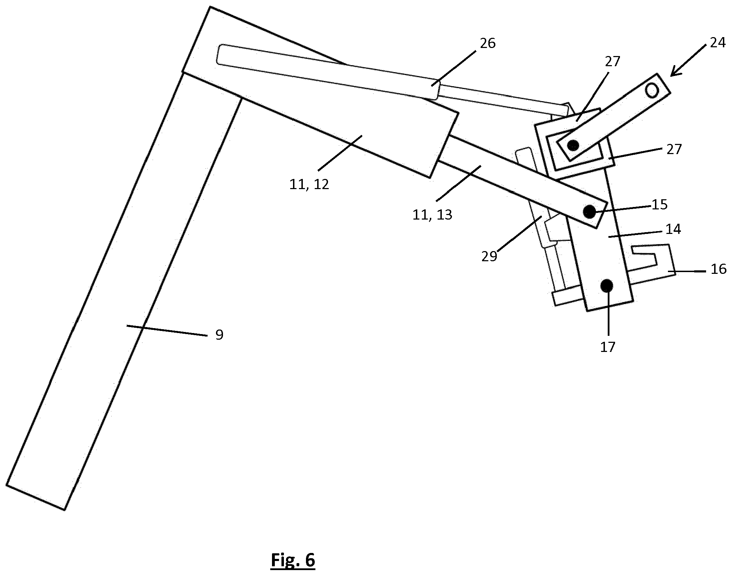

In den Fig. 5 und 6 ist die Ladearmanordnung mit geschwenktem Haupt- und Hilfsarm 9, 11 dargestellt. Dabei sind in Fig. 5 der Schwenkarmteil 14 und der Greifhaken 16 nach vorne in Richtung der Fahrerkabine 3 (nicht dargestellt) geschwenkt. In Fig. 6 ist der Schwenkarmteil 14 und der Greifhaken entgegengesetzt nach hinten geschwenkt.

Ein besonderer Vorteil dieser Ladearmanordnung 8 besteht darin, dass es möglich ist, die ISO-Container und/oder die Transportbehälter 5 mit dem entsprechenden Haken 7 vollautomatisiert aufzuladen und zu entladen.

Es ist weder nötig, dass manuell ein Adapter zum Umrüsten von ISO-Containern 5 auf ein Greifhakensystem eingesetzt werden muss, noch ist es nötig, dass das Wechselladerfahrzeug 1 präzise fluchtend zum ISO-Container 5 ausgerichtet ist oder dass der ISO-Container 5 mit der gleichen Neigung wie das Wechselladerfahrzeug 1 steht.

Die eingangs genannten Nachteile sind daher vermieden und entsprechende Vorteile sind erzielt.

### Bezugszeichenliste:

- 1: Wechselladerfahrzeug
- 2: Ladefläche
- 3: Fahrerkabine
- 4: Abrollbehälter
- 5: Transportbehälter
- 6: Abrollpritsche
- 7: Haken
- 8: Ladearmanordnung
- 9: Hauptarm
- 10: Kolbenzylindereinheit
- 11: Hilfs arm
- 12: erstes Teleskoparmteil
- 13: zweites Teleskoparmteil
- 14: Schwenkarmteil
- 15: Gelenk
- 16: Greifhaken
- 17: Gelenk
- 18: Ausnehmung
- 19: Schenkel des Hilfsarms bzw. des zweiten Teleskoparmteils
- 20: Traversenbereich / Traverse
- 21: Traversenbereich / Traverse
- 22: Pfeil
- 23: Pfeil
- 24: Eckgreifer
- 25: Eckgreifer
- 26: Kolbenzylindereinheit
- 27: Gehäuse
- 28: Längsachse des Schwenkarmteils
- 29: Kolbenzylindereinheit
- 30: Schenkel des Schwenkarmteils
- 31: Schenkel des Schwenkarmteils
- P1: Pfeil
- P2: Pfeil
- P3: Pfeil
- P4: Pfeil
- P5: Pfeil

## Patentansprüche

1. Ladearmanordnung (8) für ein Wechselladerfahrzeug (1), wobei die Ladearmanordnung (8) zum Entladen und Beladen von Transportbehältern (6) mit einem Haken (7) ausgebildet ist, wobei die Ladearmanordnung (8) aufweist:
• einen Hauptarm (9),
• einen mit dem Hauptarm (9) verbundenen Hilfsarm (11), und
• ein Schwenkarmteil, wobei an dem Hilfsarm (11) schwenkbar das Schwenkarmteil (14) über ein Gelenk (15) angeordnet ist,
wobei in einer Transportstellung das Schwenkarmteil (14) in eine Ausnehmung (18) des Hilfsarms (11) eingreift, **wobei** die Ladearmanordnung (8) einen Greifhaken (16) aufweist, wobei der Greifhaken (16) an einem ersten Ende Schwenkarmteils (14) angeordnet ist, wobei der Greifhaken (16) zum Greifen von Transportbehältern (5) mit einem Haken (7) dient, **dadurch gekennzeichnet, dass** an einem zweiten Ende des Schwenkarmteils (14) eine Traverse (20, 21) mit zumindest zwei Eckgreifern (24, 25) angeordnet ist, wobei die Eckgreifer (24, 25) zum Entladen und Beladen von ISO-Containern geeignet sind.

2. Ladearmanordnung nach Anspruch 1, **dadurch gekennzeichnet, dass** der Hilfsarm (11) zwei Schenkel (19) aufweist, wobei die Schenkel (19) die Ausnehmung (18) begrenzen, wobei das Schwenkarmteil (14) an den Schenkeln (19) gelenkig angeordnet ist.

3. Ladearmanordnung nach einem der vorstehenden Ansprüche, **dadurch gekennzeichnet, dass** das Gelenk (15) sich im Bereich 40 % bis 60 % der Längserstreckung des Schwenkarmteils (14) zwischen dem ersten und dem zweiten Ende des Schwenkarmteils (14) befindet.

4. Ladearmanordnung nach einem der vorstehenden Ansprüche, **dadurch gekennzeichnet, dass** der Greifhaken (16) mittels eines weiteren Gelenks (17) drehbar an dem Schwenkarmteil (14) angeordnet ist.

5. Ladearmanordnung nach einem der vorstehenden Ansprüche, **dadurch gekennzeichnet, dass** das Schwenkarmteil (14) zwei Schenkel (30, 31) aufweist, wobei der Greifhaken (16) gelenkig an diesen beiden Schenkeln (30, 31) angeordnet ist.

6. Ladearmanordnung nach einem der vorstehenden Ansprüche, **dadurch gekennzeichnet, dass** der Hilfsarm (11) teleskopierbar ausgebildet ist, wobei der Hilfsarm (11) ein am Hauptarm (9) winkelfest angeordnetes, erstes Teleskoparmteil (12) und ein zweites Teleskoparmteil (13) aufweist, wobei das zweite Teleskoparmteil (13) relativ zum ersten Teleskoparmteil (11) teleskopierbar ist, wobei an dem zweiten Teleskoparmteil (13) das Schwenkarmteil (14) gelenkig angeordnet ist.

7. Ladearmanordnung nach einem der vorstehenden Ansprüche, **dadurch gekennzeichnet, dass** die Traverse (20, 21) um eine Querachse schwenkbar ist, wobei die Querachse sich senkrecht zu einer Längsachse der Traverse (20, 21) und senkrecht zu einer Längsachse (28) des Schwenkarmteils (14) erstreckt.

8. Ladearmanordnung nach Anspruch 7, **dadurch gekennzeichnet, dass** die Traverse (20, 21) um die Längsachse (28) des Schwenkarmteils (14) schwenkbar ist.

9. Ladearmanordnung nach einem der vorstehenden Ansprüche, **dadurch gekennzeichnet, dass** der die Traverse (20, 21) und das Schwenkarmteil (14) über ein Kreuzgelenk verbunden sind.

## Claims

1. Loading arm assembly (8) for a load-handling vehicle (1) configured for unloading and loading transportation containers (6) having a hook (7), the loading arm assembly (8) including:
a main arm (9),
an auxiliary arm (11) connected with respect to the main arm (9),
a pivot arm part (14) connected with respect to the auxiliary arm (11) so as to be pivotable by way of an articulation (15), wherein the pivot arm part (14) in a transporting position engages in a clearance (18) of the auxiliary arm (11), wherein the loading arm assembly (8) further comprises a gripping hook (16) connected with respect to a first end of the pivot arm part (14), the gripping hook (16) configured for unloading and loading of transportation containers (5) having a hook (7),
**characterized in that** a crossbeam (20, 21) is connected with respect to a second end of the pivot arm part (14), the crossbeam (20, 21) including at least two corner grippers (24, 25) configured for unloading and loading of ISO containers.

2. Loading arm assembly according to Claim 1, **characterized in that** the auxiliary arm (11) has two legs (19), wherein the legs (19) delimit the clearance (18), wherein the pivot arm part (14) is disposed so as to be articulated on the legs (19).

3. Loading arm assembly according to one of the preceding claims, **characterized in that** the articulation (15) is situated in a range of 40% to 60% of the longitudinal extent of the pivot arm part (14), between the first and second ends of the pivot arm part (14).

4. Loading arm assembly according to one of the preceding claims, **characterized in that** the gripping hook (16) by means of a further articulation (17) is disposed so as to be rotatable on the pivot arm part (14).

5. Loading arm assembly according to one of the preceding Claims, **characterized in that** the pivot arm part (14) has two legs (30, 31), wherein the gripping hook (16) is disposed so as to be articulated on said two legs (30, 31).

6. Loading arm assembly according to one of the preceding claims, **characterized in that** the auxiliary arm (11) is configured so as to be telescopic, wherein the auxiliary arm (11) has a first telescopic arm part (12) that is disposed at a fixed angle on the main arm (9), and has a second telescopic arm part (13), wherein the second telescopic arm part (13) is capable of being telescopically moved relative to the first telescopic arm part (11), wherein the pivot arm part (14) is disposed so as to be articulated on the second telescopic arm part (13).

7. Loading arm assembly according to one of the preceding Claims, **characterized in that** the crossbeam (20, 21) is pivotable about a transverse axis, the transverse axis extends perpendicularly to a longitudinal axis of the crossbeam (20,21) and perpendicularly to a longitudinal axis (28) of the pivot arm part (14).

8. Loading arm assembly according to the preceding Claim 7, **characterized in that** the crossbeam (20, 21) is pivotable about the longitudinal axis (28) of the pivot arm part (14).

9. Loading arm assembly according to one of the preceding claims, **characterized in that** the crossbeam (20, 21) and the pivot arm part (14) are connected by way of a universal joint.

## Revendications

1. Agencement (8) de bras de chargement pour un véhicule (1) à cargaison interchangeable, l'agencement (8) de bras de chargement étant conçu pour le déchargement et le chargement de conteneurs de transport (6) avec un crochet (7), l'agencement (8) de bras de chargement comprenant :
• un bras principal (9),
• un bras auxiliaire (11) relié au bras principal (9), et
• une partie pivotante de bras, la partie pivotante (14) de bras étant agencée de manière pivotante sur le bras auxiliaire (11) par l'intermédiaire d'une articulation (15),
dans une position de transport, la partie pivotante (14) de bras s'engage dans un évidement (18) du bras auxiliaire (11), l'agencement (8) de bras de chargement présentant un crochet de préhension (16), le crochet de préhension (16) étant agencé sur une première extrémité de la partie pivotante (14) de bras, le crochet de préhension (16) servant à saisir des conteneurs de transport (5) avec un crochet (7), **caractérisé en ce qu'**une traverse (20, 21) avec au moins deux pinces d'angle (24, 25) est agencée à une deuxième extrémité de la partie pivotante (14) de bras, les pinces d'angle (24, 25) étant adaptées au déchargement et au chargement de conteneurs ISO.

2. Agencement de bras de chargement selon la revendication 1, **caractérisé en ce que** le bras auxiliaire (11) présente deux branches (19), les branches (19) délimitant l'évidement (18), la partie pivotante (14) de bras étant agencée de manière articulée sur les branches (19) .

3. Agencement de bras de chargement selon l'une des revendications précédentes, **caractérisé en ce que** l'articulation (15) se trouve dans une zone allant de 40 % à 60 % de l'extension longitudinale de la partie pivotante (14) de bras entre la première et la deuxième extrémité de la partie pivotante (14) de bras.

4. Agencement de bras de chargement selon l'une des revendications précédentes, **caractérisé en ce que** le crochet de préhension (16) est agencé de manière rotative sur la partie pivotante (14) de bras au moyen d'une autre articulation (17).

5. Agencement de bras de chargement selon l'une des revendications précédentes, **caractérisé en ce que** la partie pivotante (14) de bras présente deux branches (30, 31), le crochet de préhension (16) étant agencé de manière articulée sur ces deux branches (30, 31).

6. Agencement de bras de chargement selon l'une des revendications précédentes, **caractérisé en ce que** le bras auxiliaire (11) est conçu de manière télescopique, le bras auxiliaire (11) présentant une première partie (12) de bras télescopique agencée de manière angulairement fixe sur le bras principal (9) et une deuxième partie (13) de bras télescopique, la deuxième partie (13) de bras télescopique étant télescopique par rapport à la première partie (12) de bras télescopique, la partie pivotante (14) de bras étant agencée de manière articulée sur la deuxième partie (13) de bras télescopique.

7. Agencement de bras de chargement selon l'une des revendications précédentes, **caractérisé en ce que** la traverse (20, 21) est apte à pivoter autour d'un axe transversal, l'axe transversal s'étendant perpendiculairement à un axe longitudinal de la traverse (20, 21) et perpendiculairement à un axe longitudinal (28) de la partie pivotante (14) de bras.

8. Agencement de bras de chargement selon la revendication 7, **caractérisé en ce que** la traverse (20, 21) est apte à pivoter autour de l'axe longitudinal (28) de la partie pivotante (14) de bras.

9. Agencement de bras de chargement selon l'une des revendications précédentes, **caractérisé en ce que** la traverse (20, 21) et la partie pivotante (14) de bras sont reliées par une articulation à cardan.
